# EUROPÄISCHE PATENTSCHRIFT

(11) **EP 0 633 947 B1**
(45) Veröffentlichungstag und Bekanntmachung des Hinweises auf die Patenterteilung: **31.03.1999**
(21) Anmeldenummer: 93901627.5
(22) Anmeldetag: 06.01.1993
(51) Int. Cl.: C22B 7/02, F27B 3/08

(54) **Verfahren zum Behandeln von riesel- oder fliessfähigem Material**
Method for processing free-flowing materials
Procédé pour traiter un matériau coulant

(30) Priorität: 31.03.1992 DE 4211164
(43) Veröffentlichungstag der Anmeldung: 18.01.1995
(73) Patentinhaber: MANNESMANN Aktiengesellschaft, 40213 Düsseldorf (DE)
(72) Erfinder: KÖNIG, Heribert, D-4100 Duisburg 1 (DE); RATH, Gero, D-4330 Mülheim/Ruhr (DE); RICHTER, Wolfgang, D-4100 Duisburg 46 (DE); STÄUBNER, Hermann, D-4100 Duisburg 25 (DE)
(74) Vertreter: Meissner, Peter E., Dipl.-Ing.
(86) Internationale Anmeldenummer: DE9300011
(87) Internationale Veröffentlichungsnummer: WO9320252

(56) Entgegenhaltungen:
- EP-A- 0 007 856
- EP-A- 0 096 538
- EP-A- 0 216 395
- WO-A-87/01792
- DE-A- 1 914 212
- DE-B- 2 333 022
- FR-A- 2 306 266
- US-A- 4 957 551
- US-A- 5 004 496
- PATENT ABSTRACTS OF JAPAN vol. 15, no. 137 (C-821)16 Juni 1989 & JP,A,3 020 403 (KAWASAKI STEEL CORP) 29 January 1991
- PATENT ABSTRACTS OF JAPAN vol. 15, no. 129 (M-1098)12 Juni 1989 & JP,A,3 013 792 (TANABE KAKOKI KK) 22 January 1991
- DATABASE WPI Week 16, 1973 Derwent Publications Ltd., London, GB; AN 73-21131U & DD,A,95 436 (HOCHKIRCH ET AL.) 12 February 1973
- DATABASE WPIL Week 7, 1982 Derwent Publications Ltd., London, GB; AN 82-13058E & SE,A,8 003 454 (ASEA AB) 7 December 1981
- DATABASE WPI Week 7, 1979 Derwent Publications Ltd., London, GB; AN 79-12681B & JP,A,54 001 216 (DAIDO TOKUSHOKO KK) 8 January 1979

## Beschreibung

Die Erfindung betrifft ein Verfahren zur Behandlung von riesel- oder Fließfähigem mit Zuschlägen versetztem Material gemäß dem Oberbegriff des Patentanspruchs 1.

Beim Einsatz von Anlagen der Metallgewinnung und -behandlung wird das Rauchgas zum Schutze der Umwell über Filter geleitet. Dieses Gas enthält Slaubsteilchen, die entweder wertvolle Legerungsträger enthalten, die man wiedergewinnen möchte, oder giftige Bestandteile, deren Deponierung man vermeiden möchte.

So werden z.B. bei der Edelstahlerzeugung anfallende Reststoffe, vornehmlich Filterstäube und Schlämme, überwiegend Deponien zugeführt. Zum einen gelangten hier deutlich erfaßbare Anteile von wertvollen Legierungsträgern und Stahlveredlern, wie Chrom, Nickel, Molybdän und Mangan verwertungslos auf den Deponien, zum anderen enthalten die Reststoffe giftige Bestandteile, die ein Ablagern nur auf Sonderdeponien mit entsprechend hohem Kostenaufwand und der Gefahr der Umweltschädigung zulassen. Bei anderen Prozessen enthalten diese Stäube noch weitere wertvolle Materialen, beispielsweise Blei oder Zink.

Bei der Verbrennung von Müll verbleiben als feste Rückstände Schlacke, Filterstäube und Reaktionsprodukte aus der Abgasreinigung. Ein besonderes Augenmerk ist neben dem Schwermetallgehalt auf die Aulagerung von organischen Verbindungen wie Dioxinen und Furanen zu richten. Feuerungsbedingle Schadstoffe wie Kohlenmonoxide und Slickstoffoxide weisen insbesondere wegen der durch den Müll eingebrachten Stoffe wie Quecksilber, Schwermetalle und chlorhaltige Verbindungen bei den vorherrschenden Verbrennungstemperaturen in den Müllverbrennungsanlagen oft neue, unerwünschte und in einigen Fällen giftige Verbindungen in der Schlacke, der Filterasche und dem Rauchgas sowie den Anlagerungen auf.

Es liegen eine Reihe von Vorschlägen zur Behandlung solcher Reststoffe vor. So ist aus der DE-OS 37 05 787 bekannt, Abfallstaub in einer oxidierenden Atmosphäre auf eine Temperatur zu erhitzen, die ausreicht, um Bleioxiddämpfe zu bilden, dabei die Bleioxiddämpfe von im Gas vorhandenen Zinkoxid zu trennen und die Bleioxiddämpfe zu verfestigen und das erstarrte Bleioxid wiederzugewinnen. Bei diesem Verfahren bleiben eine Reihe von Giften in den Ausgangsmaterialien.

Aus DE-OS 38 27 086 ist ein Verfahren zur thermischen Entkontaminierung von Filterstäuben und anderen Reststoffen, insbesondere Rückstände aus Verbrennungs-, Pyrolyse- und Lack-Schlammaufbereitungsanlagen bekannt, bei dem das Material zur Entfernung von evtl. enthaltenen Dioxinen und Furanen in einen Tiegelofen eingebracht wird, dort bei Temperaturen von 1.400 bis 1.600 Grad eingeschmolzen wird, die flüssige Phase ausgetragen und abgeschreckt und die Gasphase in einem Entstauber behandelt wird.

Bei diesem Verfahren werden entweder nicht alle Stoffe erfaßt, die man entweder wiedergewinnen oder vernichten möchte, oder die Wiedergewinnung bzw. Zersetzung wird nicht im erwünschten Maße erreicht.

Aus der WO-A-8701792 ist ein Elektrolichtbogenofen bekannt, bei dem die Anode und die Kathode koaxial zueinander geführt sind, wobei eine der gennanten, in die Metallschmelze eintauchenden Elektroden hohl ausgebildet ist. In den Hohlbraum bzw. Freiraum zwischen den beiden Elektroden wird Abfallstaub ringförmig geleitet, der der Oberfläche der Schmelze im Schatten der hülsenförmigen Elektrode zugeführt wird. Am Ende der Elektroden wird das Abfallmaterial durch die elektrische Entladung aufgeheizt.

Aus der FR-A-2306266 ist ein Ofen mit einer Söderberg-Elektrode bekannt, durch deren Bohrung Feinmaterial enthaltend Eisenoxid sowie hohlenstoffhaltiges Material auf die Oberfläche der Schmelze förderbar ist. Weder diese Elektrode noch die vorher erwähnte Elektrode besitzen fußendig Absperrmittel, mit denen an dieser Stelle Einfluß auf die Zuführung des Materials genommen werden kann.

Die vorliegende Erfindung hat sich daher das Ziel gesetzt, ein Verfahren zur Behandlung von riesel-oder fließfähigem Material zu schaffen, bei dem das Endprodukt wiederverwendbar oder umwelterträglich ablagerbar ist.

Die Erfindung löst diese Aufgabe durch die Merkmale des Verfahrensanspruchs 1. Vorzugsweise Ausgestaltungen ergeben sich aus den Unteransprüchen.

Erfindungsgemäß kommt ein mit Gleich- oder Wechselstrom betriebener Schmelzofen zum Einsatz, bei dem das zu behandelnde rieselfähige Material stoßweise durch die Bohrung der Elektrode(n) zugeführt wird. Die Elektrode taucht dabei in die auf der metallischen Schmelze schwimmende Schlacke ein.

Verarbeitet werden insbesondere Filterstäube aus Anlagen der Eisenhütten- und Metallhüttenindustrie und aus Müllverbrennungsanlagen. Diese Stäube werden mit einem reduzierenden Mittel, beispielsweise Koksgruß und gegebenenfalls mit Zuschlägen wie Quarz und Kalk in einem vorgebbaren Mischungsverhältnis vermengt. Dieses Gemenge wird durch die Bohrung der Hohlelektrode auf die in den Elektrodenkopf eindringende Schlackenoberfläche aufgebracht. Das Gemenge nimmt von der Schlacke wie von der umgebenden Elektrode Wärme auf, und es kommt zu einer ersten Reaktion zwischen den Komponenten des Gemenges. Bei dieser Reaktion entwickelt sich Gas und die Schlacke schäumt auf. Eine Folge dieser Gasentwicklung ist ein Druckanstieg in der ansonsten abgeschlossenen Bohrung der Hohlelektrode.

Erfindungsgemäß wird auf diesen Gastdruck Einfluß genommen. Es besteht die Möglichkeit, durch Druckentlastung den Druck so stark zu mindern, daß das Gemenge langsam von der Schlacke aufgenommen wird. Es besteht die Möglichkeit, den Gasdruck zu erhöhen und somit die am Kopfende der Elektrode befindliche Gemengeansammlung gezielt in die Schmelze einzudrücken. Wesentlich ist uber in jedem Fall die Stoßweise zuführung. Mit Furtschreitender Gasdruckerhöhung und Aufnahme des Gemenges durch die Schlacke kommt es zu einem entsprechenden Aufschäumen der Schlacke.

Durch das Aufschäumen der Schlacke im Bereich des Elektrodenkopfes kommt es zu einer deutlichen Erhöhung des elektrischen Widerstandes der Schlacke. Dieser Effekt wird noch erhtöht durch das Abkühlen der Schlacke durch das Einbringen des im Vergleich zur Schlacke deutlich kälteren Gemenges. Erfindungsgemäß wird hier die elektrische Leistung vorgebbar erhöht und damit die Wärmezufuhr der Gemengerate entsprechend gesteigert.

In Abhängigkeit der chemischen Zusammensetzung und der physikalischen Eigenschaften der einzelnen Bestandteile des Gemenges verlassen diese das metallurgisches Gefäß über einen der nachfolgend aufgeführten drei Wege:
a) Bestandteile, die ein höheres spezifisches Gewicht aufweisen als die Schlacke und die ausreichend Zeit haben zum Absinken aus der Schlacke, werden von der metallischen Schmelze aufgenommen und mit dieser dem metallurgischen Gefäß entnommen.
b) Bestandteile, die verdampfen oder die so leicht sind, daß sie vom Gas mitgerissen werden, werden einer Entstaubungsanlage zugeführt. Führt das zu verarbeitende Gemenge zu Gasen, die verdampfte Metalle wie Zink und Blei enthalten, so werden die Gase, soweit sie metallisch vorliegen, dem Kondensator zugeführt, in dem diese Metalle abgeschieden werden. Liegen bei diesen Gasen Metalle in oxidischer Form vor, so werden diese mit dem Staub ausgetragen und können wiederverwertet werden. Zur Vernichtung hochtemperaturbeständiger Schadstoffe im Abgas das belastete Gas noch einer einer Nachverbrennungskammer zugeführt werden.
c) Bestandteile mit einem spezifischen Gewicht, das dem der Schlacke vergleichbar ist, bleiben in der Schlacke und werden mit dieser dem metallurgischen Gefäß entnommen.

In einer vorteilhaften, Weise erfolgt das Zuführen des Gemenges chargenweise. Die einzelnen Chargen sammeln sich als Pfropfen am Kopf der Hohlelektrode und werden hier durch einen Druckimpuls mittels eines Fördergases in die Schlacke gepreßt.

Einfluß auf die Verweilzeit des Gemenges in der Schlacke und damit die Beeinflussung der Reaktionszeit zwischen den einzelnen Partikeln und der Schlacke wird durch die Wahl des Reduktionsmittels und seiner Teilchengröße genommen. In einer vorteilhaften Ausbildungsform kommen sogenannte selbstgängige Pellets zum Einsatz.

Der Schmelzofen wird üblicherweise diskontinuierlich asgestochen Hierbei verweilt die Schlacke eine ausreichende Zeit im Ofengefäß. Es besteht damit die Möglichkeit, weiteren Einfluß auf die SChlacke zu nehmen. So ist die Viskosität der Schlacke bestimmend für die Reaktionsintensität und -dauer zwischen den in der Schlacke verbliebenen Bestandteilen des Gemenges und der Schlacke selber.

Brennbare Bestandteile im Rauchgas können im Ofenraum bereits verbrannt werden. Hierzu wird vorgeschlagen, oxidierende Fluide in den Ofenraum einzubringen. Zur Vermeidung der Reoxidation der Schlacke ist diese durch eine Koksschicht abgedeckt.

Das erfindungsgemäße Verfahren hat den Vorteil, daß die fein- und staubförmigen Einsatzstoffe beim Beschicken nicht dem thermischen Auftrieb der Herdatmosphäre ausgesetzt sind, wodurch eine erhöhle Slaubbelastung des Abgases vermieden wird.

Das geringe spezifische Gewicht von Kohlenstoffträgern wie Koks und Kohle führt zum Aufschwimmen dieser Eintragsbestandteile auf das Schlackenbad. Dadurch wirt für den metallurgischen Prozeß erforderliche innige Kontakt zwischen Schmelze und Reducktionsmittel behindert und gegebenenfalls verhindert. Das erfindungsgemäße Verfahren bewirkt gerade diesen innigen Kontakt durch direktes Einbringen des Reduktionsmittels in die Schlacke und die Kontakte werden noch gesteigert durch die in Folge des direkten Einbringungens bewirkten Schlacketurbulenz.

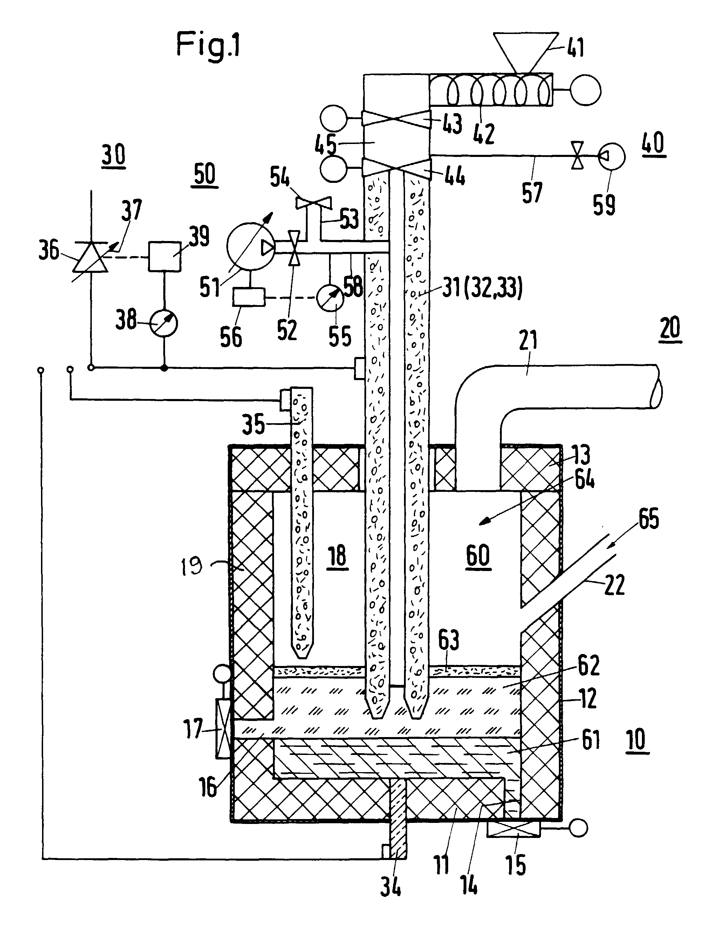

Ein Ausführungbeispiel der Erfindung zeigt die Figur 1.

Dabei zeigt die Figur 1 ein metallurgisches Gefäß 10, mit einem Boden 11 einer Wand 12 und einem Deckel 13, die alle mit einer feuerfesten Masse 19 ausgekleidet sind. Im Bereich des Bodens 11 befindet sich eine Abstichsöffnung 14, die durch einen Verschluß 15 absperrbar ist. Weiterhin ist in der Wand 12 ein Schlackenabstich 16 vorgesehen, der mit einem Verschluß 17 absperrbar ist.

Der Deckel 13 besitzt einen Gasabzug 21, der mit einer nicht weiter dargestellten Gasreinigung 20 in Verbindung steht.

Durch den Deckel ist weiterhin eine Elektrode 31 geführt, die kopfendig in das metallurgische Gefäß 10 hineinragt. Bei einem mit Drehstrom betriebenen metallurgischen Gefäß 10 sind im Deckel die Elektroden 31, 32, 33 vorgesehen. Wird das Gefäß 10 mit Gleichstrom betrieben, so ist im Boden 11 eine Bodenelektrode 34 angeordnet.

Zusätlich zu den Elektroden 31 bis 33 der Stromversorgungsanlage kann ebenfalls durch den Deckel 13 geführte Zusatzelektrode 35 angeordnet sein.

Die Stromversorgungsanlage 30 weist Elemente 36 zur Konstanthaltung des Stromes und Bauteile 37 zur Regelung der Leistung darauf, die wiederum mit einer Regeleinrichtung 39 verbunden sind. Die Regeleinrichtung 39 ist mit verschiedenen Meßeinrichtungen verbunden, dargestellt sind in der Figur 1 z.B. der Leistungsmesser 38.

Die Elektroden 31 bis 33 und gegebenenfalls die Elektrode 35 sind als Hohlelektroden ausgebildet. Am Fußende der Elektroden ist die Materielzufuhr 40 angeordnet, die einen Behälter 41 aufweist, der das Material einem volumetrischen Förderer 42 zuführt. In der Skizze ist der Förderer 42 als Schnecke ausgebildet, die das Material zur Schleuse 45 befördert. Die Schleuse 45 weist dabei die Absperrung 43 und 44 auf. Nicht dargestellt ist die Ausgestaltung des Förderers 42 als Zellrad.

Die Schleuse 45 (bzw. eine Zelle des Zellrades) ist mit einer Druckleitung 57 verbunden. Mit dieser Druckleitung besteht die Möglichkeit, mittels einer Pompe 59 gasförmige Medien in die Schleuse einzubringen und dort gezielt zeitlich wie mengenmäßig Einfluß auf das in den Ofen zu fördernde Gemenge zu nehmen.

In Materialförderrichtung hinter der Schleuse sind die Elektroden 31 bis 33 mit einer Gaszu- und Abfuhreinrichtung 50 verbunden, die eine Pumpe 51 aufweist, die über eine Absperrung 52 aufweisende Gaszufuhrleitung 58 mit der Bohrung der Hohlelektrode 31 verbunden ist. Die Gaszufuhrleitung 58 weist darüber hinaus eine Ablaßöffnung 53 auf, die durch eine Absperrung 54 aktivierbar ist.

Weiterhin ist die Gaszufuhrleitung 58 mit einem Druckmesser 55 versehen, der regeltechnisch mit einer Regeleinrichtung 56 in Verbindung steht, die die Pumpe 51 steuert.

In der Wand 12 des metallurgischen Gefäßes 10 ist noch eine Gaszufuhr 22 vorgesehen, durch die ein Oxydationsfluid 65 in den Ofenraum 18 einbringbar ist.

Im metallurgischen Gefäß befinden sich folgende Medien 60 und zwar die Schmelze 61, die Schlacke 62, der Koksgruß 63 und das Rauchgas 64.

## Patentansprüche

1. Verfahren zur Behandlung von riesel- oder fließfähigem mit Zuschlägen versetztem Material, insbesondere von Filterstäuben aus Hüttenindustrie sowie Müllverbrennungsanlagen, in einem mit aus Metall und Schlacke bestehender Schmelze gefüllten, mit Gleich- oder Wechselstrom betriebenen Niederschachtofen, bei dem das Material durch die Bohrung mindestens einer kopfendig in die im Gefäß befindliche Schlacke eintauchenden Hohlelektrode auf die Oberfläche der in der Bohrung der Hohlelektrode befindlichen Schlacke aufgebracht wird, wobei folgende Schritte vorgesehen sind:
a) das riesel- oder fließfähige Material wird mit einem Kohlenstoffträger als Reduktionsmittel trocken vermengt,
b) die Bohrung der Hohlelektrode wird fußendig durch Eintauchen des Kopfes der Elektrode in die Schlacke geschlossen und durch Erhöhung des in der Bohrung herrschenden Gasdruckes wird das Gemenge stoßweise pneumatisch in die schmelzflüssige Schlacke gefördert,
c) während der Reaktion zwischen dem Gemenge und der Schlacke wird diesen in vorgebbarem Maße Wärmeenergie zugeführt,
d) die Bestandteile des Gemenges, die verdampfen oder vom Verbrennungsgas mitgerissen werden, werden oberhalb des Schlackenspiegels abgesaugt und einer Filter- und / oder Kondensationsanlage zugeführt,
e) die Bestandteile des Gemisches, die auf- oder angeschmolzen werden und dabei ein spezifisches Gewicht aufweisen, das größer ist als das der Schlacke, sinken ab und werden mit der Schmelze abgestochen,
die übrigen Bestandteile des Gemenges verbleiben in der Schlacke und werden mit dieser ausgetragen.

2. Verfahren nach Anspruch 1,
dadurch gekennzeichnet,
daß das riesel- oder fließfähige Material zusätzlich mit Zuschlägen vermengt wird, die Bestandteile zur günstigen Beeinflussung der Schmelzenzusammensetzung und des Prozeßablaufes besitzen z.B. Quarz oder Kalk.

3. Verfahren nach Anspruch 1,
dadurch gekennzeichnet,
daß das riesel- oder fließfähige Material mit einem eine um das mindestens 3-fache größere Korngröße aufweisenden Kohlenstoffträger vermengt wird.

4. Verfahren nach Anspruch 2 oder 3,
dadurch gekennzeichnet,
daß das Gemenge aus riesel- oder fließfähigem Material und der Kohlenstoffträger und den Zuschlägen in Form von Pellets vorbereitet wird.

5. Verfahren nach Anspruch 1,
dadurch gekennzeichnet,
daß das Aufbringen des Gemenges innerhalb der Bohrung der Hohlelektrode chargenweise erfolgt.

6. Verfahren nach Anspruch 1,
dadurch gekennzeichnet,
daß die Schlacke mit einer aus einem Reduktionsmittel bestehenden Schicht abgedeckt ist.

7. Verfahren nach Anspruch 1,
dadurch gekennzeichnet,
daß die Zufuhr der Wärmemenge gesteuert wird durch die Veränderung der Verhältnisse der elektrischen Leistung zur Aufgaberate und zum Aufgaberythmus des Gemenges.

8. Verfahren nach Anspruch 1,
dadurch gekennzeichnet,
daß die Einzeltemperaturen von Metall, Schlacke und Gas eingestellt werden durch Änderung der Schlackenhöhe und/oder der Eintauchtiefe der Elektrode in die Schlacke.

9. Verfahren nach einem der Ansprüche 6 bis 8,
dadurch gekennzeichnet,
daß die Reaktionsaktivität der in der Schlacke verbleibenden Bestandteile des Gemenges durch Erhöhung der Schlackentemperatur gefördert wird.

10. Verfahren nach einem der vorstehenden Ansprüche,
dadurch gekennzeichnet,
daß während des Absaugens die verdampften und vom Rauchgas mitgerissenen Bestandteile des Gemenges im Ofenraum oberhalb des abgedeckten Schlackenspiegels mit Oxidationsmitteln in Verbindung gebracht werden.

11. Verfahren nach Anspruch 10,
dadurch gekennzeichnet,
daß das Abgas zur Behandlung im Abgas vorhandener hochtemperaturbeständiger, giftiger Bestandteile des Gemenges in einer nachgeschalteten Anlage nachverbrannt wird.

## Claims

1. A method of processing pourable or free-flowing material mixed with additives, in particular filter dusts from the metallurgical industry and refuse incineration plants, in a low-shaft furnace filled with melt consisting of metal and slag and operated with direct or alternating current, in which furnace the material is applied, via the bore in at least one hollow electrode immersed at its head end in the slag located in the vessel, to the surface of the slag located in the bore of the hollow electrode, the following steps being provided:
a) the pourable or free-flowing material is mixed in the dry state with a carbon source acting as reducing agent
b) the bore in the hollow electrode is closed at the stem end by immersion of the head of the electrode in the slag and the mixture is conveyed pneumatically in batches into the molten slag by increasing the gas pressure prevailing in the bore,
c) during the reaction between the mixture and the slag, thermal energy is fed thereinto to a predeterminable extent,
d) the constituents of the mixture which vaporise or are entrained by the combustion gas are sucked off above slag level and fed to a filter and/or condensation plant,
e) the constituents of the mixture which are completely or partially melted and have a specific weight which is greater than that of the slag sink down and are tapped with the melt,
the other constituents of the mixture remain in the slag and discharged therewith.

2. A method according to claim 1,
characterised in that
the pourable or free-flowing material is additionally mixed with additives which comprise constituents intended to influence favourably the melt composition and the course of the process, e.g. quartz or lime.

3. A method according to claim 1,
characterised in that
the pourable or free-flowing material is mixed with a carbon source having a grain size at least three times larger.

4. A method according to claim 2 or claim 3,
characterised in that
the mixture of pourable or free-flowing material and the carbon sources and the additives is prepared in pellet form.

5. A method according to claim 1,
characterised in that
application of the mixture inside the bore of the hollow electrode is effected in batches.

6. A method according to claim 1,
characterised in that
the slag is covered with a layer consisting of a reducing agent.

7. A method according to claim 1,
characterised in that the supply of heat is controlled by changing the ratios of electric power to feed rate and feed rhythm of the mixture.

8. A method according to claim 1,
characterised in that
the individual temperatures of the metal, slag and gas are adjusted by changing the slag height and/or the immersion depth of the electrode in the slag.

9. A method according to any one of claims 6 to 8,
characterised in that
the reaction activity of the constituents of the mixture remaining in the slag is promoted by increasing the slag temperature.

10. A method according to any one of the preceding claims,
characterised in that,
during removal by suction, the volatilised constituents of the mixture and those entrained by the flue gas are brought into contact with oxidising agents in the furnace chamber above the covered slag surface.

11. A method according to claim 10,
characterised in that
the exhaust gas undergoes afterburning in an installation arranged downstream in order to process any poisonous, high temperature-resistant constituents of the mixture present in the exhaust gas.

## Revendications

1. Procédé pour traiter une matière, susceptible de couler ou de ruisseler, mélangée à des additifs, en particulier des poussières de filtration provenant de l'industrie métallurgique, ainsi que d'installations d'incinération d'ordures ménagères, dans un bas fourneau, fonctionnant à courant continu ou à courant alternatif, rempli d'une matière en fusion constituée de métal et de laitier, dans lequel la matière est appliquée, à travers le perçage d'au moins une électrode creuse plongeant, à l'extrémité de tête, dans le laitier se trouvant dans le récipient, sur la surface du laitier se trouvant dans le perçage de l'électrode creuse, les étapes suivantes étant prévues :
a) la matière susceptible de couler ou de ruisseler est mélangée, à sec, à un support de carbone comme agent réducteur,
b) le perçage de l'électrode creuse est fermé, à l'extrémité de pied, par plongée de la tête de l'électrode dans le laitier et, par augmentation de la pression de gaz régnant dans le perçage, le mélange est transporté pneumatiquement par à-coups dans le laitier en fusion,
c) pendant la réaction entre le mélange et le laitier, il est amené à ceux-ci de l'énergie thermique en une quantité qui peut être prédéfinie,
d) les constituants du mélange, qui sont vaporisés ou entraînés par le gaz de combustion, sont aspirés au-dessus du niveau du laitier et amenés à une installation de filtration et/ou de condensation,
e) les constituants du mélange, qui sont fondus et, de plus, présentent un poids spécifique qui est supérieur à celui du laitier, coulent et sont évacués avec la matière en fusion,
les constituants restants du mélange demeurent dans le laitier et sont évacués avec celui-ci.

2. Procédé selon la revendication 1,
caractérisé ce que la matière susceptible de couler ou de ruisseler est mélangée de plus à des additifs qui possèdent des constituants pour influencer de façon appropriée la composition de la matière en fusion et le déroulement du processus, par exemple du quartz ou de la chaux.

3. Procédé selon la revendication 1,
caractérisé en ce que la matière susceptible de couler ou de ruisseler est mélangée à un support de carbone présentant une grosseur de grains au moins trois fois plus grande.

4. Procédé selon la revendication 2 ou 3,
caractérisé en ce que le mélange de la matière susceptible de couler ou de ruisseler et du support de carbone et des additifs est préparé sous forme de boulettes.

5. Procédé selon la revendication 1,
caractérisé en ce que l'application du mélange à l'intérieur du perçage de l'électrode creuse est effectuée sous forme de charge.

6. Procédé selon la revendication 1,
caractérisé en ce que le laitier est recouvert d'une couche constituée d'un agent réducteur.

7. Procédé selon la revendication 1,
caractérisé en ce que l'amenée de l'énergie thermique est commandée par la modification des rapports de la puissance électrique et du débit d'alimentation et du rythme d'alimentation du mélange.

8. Procédé selon la revendication 1,
caractérisé en ce que les températures individuelles du métal, du laitier et du gaz sont réglées par modification de la hauteur du laitier et/ou de la profondeur de plongée de l'électrode dans le laitier.

9. Procédé selon une des revendications 6 à 8,
caractérisé en ce que l'activité réactionnelle des constituants du mélange demeurant dans le laitier est augmentée par augmentation de la température du laitier.

10. Procédé selon une des revendications précédentes,
caractérisé en ce que, pendant l'aspiration, les constituants vaporisés et entraînés par le gaz de fumée du mélange, dans l'espace de four, au dessus du niveau de laitier recouvert sont amenés en contact avec des agents d'oxydation.

11. Procédé selon la revendication 10,
caractérisé en ce que le gaz d'échappement pour traiter des constituants du mélange toxiques, résistant à des températures élevées présents dans le gaz d'échappement, subit une combustion ultérieure dans une installation disposée en aval.
